# EUROPÄISCHE PATENTSCHRIFT

(11) **EP 1 697 650 B1**
(45) Veröffentlichungstag und Bekanntmachung des Hinweises auf die Patenterteilung: **27.08.2008**
(21) Anmeldenummer: 04803819.4
(22) Anmeldetag: 13.12.2004
(51) Int. Cl.: F16D 9/02

(54) **VERSCHLUSS MIT THERMISCHER SICHERUNGSFUNKTION**
CLOSURE WITH A THERMAL SAFEGUARD FUNCTION
FERMETURE PRESENTANT UNE FONCTION DE SECURITE THERMIQUE

(30) Priorität: 23.12.2003 DE 10361440
(43) Veröffentlichungstag der Anmeldung: 06.09.2006
(73) Patentinhaber: Voith Turbo GmbH & Co. KG, 89522 Heidenheim (DE)
(72) Erfinder: FRANK, Anton, 74586 Oberspeltach (DE); NÖHL, Oliver, 74589 Satteldorf (DE); HOFFELD, Harald, 74564 Crailsheim (DE)
(74) Vertreter: Dr. Weitzel & Partner
(86) Internationale Anmeldenummer: PCT/EP2004/014190
(87) Internationale Veröffentlichungsnummer: WO 2005/064178

(56) Entgegenhaltungen:
- BE-A- 389 304
- GB-A- 153 122
- GB-A- 963 392
- US-A- 2 216 351
- US-A- 3 436 916
- US-A- 4 086 991
- US-A- 4 339 916

## Beschreibung

Die Erfindung betrifft auf hydrodynamische Strömungsmaschinen, deren Arbeitsraum durch einen Verschluss mit thermischer Sicherungsfunktion gegenüber der Umgebung abgeschlossen ist.

Verschlüsse mit thermischer Sicherungsfunktion sind bekannt. Solche Verschlüsse dienen der Abdichtung eines Hohlraums, beispielsweise des Arbeitsraums einer hydrodynamischen Kupplung, welcher mit einem Arbeitsmedium befüllt ist, gegenüber der Umgebung. Ein solcher Verschluss ist in der Regel in ein Gehäuse eingesetzt, welches den Hohlraum unmittelbar ausbildet oder zumindest mittelbar umgibt. Der Verschluss steht in thermisch leitender Verbindung mit dem Inhalt des Hohlraums, welcher zum Beispiel ein Arbeitsmedium in Form eines Fluids umfasst.

Die thermische Sicherungsfunktion im Sinne der vorliegenden Erfindung bedeutet, dass der Verschluss, welcher eine Temperatur in Abhängigkeit der Temperatur im Innenraum des Hohlraums annimmt, unterhalb eines vorgegebenen Temperaturgrenzwertes fluiddicht ist und sich oberhalb eines vorgegebenen Grenzwertes selbsttätig öffnet. Dies dient beispielsweise bei einer Verwendung in einer hydrodynamischen Strömungsmaschine, insbesondere hydrodynamischen Kupplung, dazu, sicherzustellen, dass das Arbeitsmedium automatisch aus der hydrodynamischen Kupplung abgelassen wird, wenn eine unzulässige obere Grenztemperatur erreicht wird. Dadurch wird eine übermäßige Überhitzung der hydrodynamischen Kupplung vermieden.

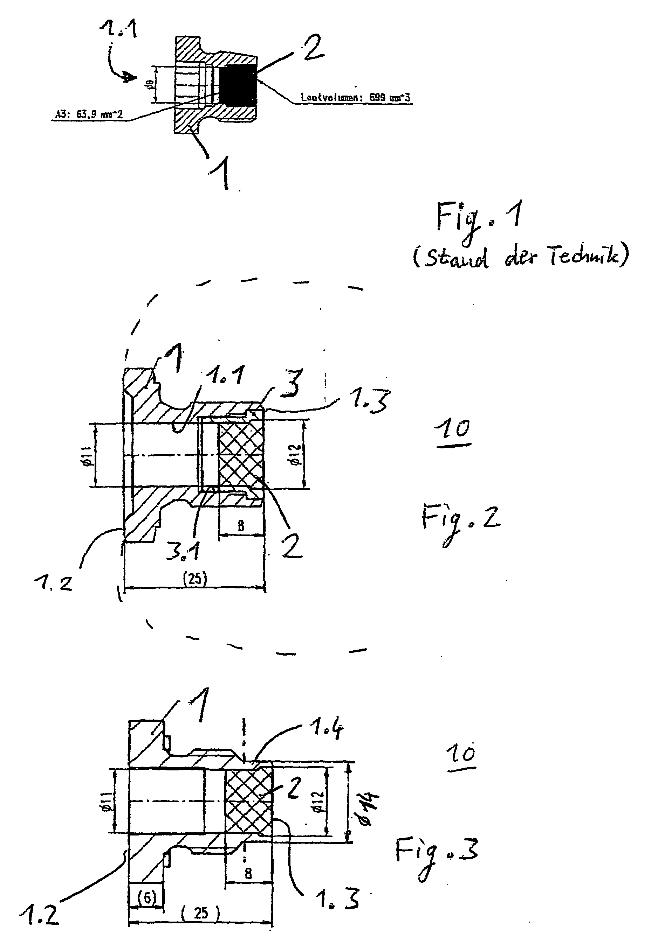

Bekannte Verschlüsse mit thermischer Sicherungsfunktion sind als Schmelzsicherungsschraube ausgebildet. Eine solche Schmelzsicherungsschraube gemäß des Standes der Technik ist in der Figur 1 gezeigt. Die Schmelzsicherungsschraube weist einen Grundkörper auf, in welchen eine Durchgangsbohrung eingebracht ist. Die Durchgangsbohrung ist durch ein Schmelzlot, das über dem gesamten Querschnitt der Durchgangsbohrung mit einer erheblichen Dicke eingebracht ist, fluiddicht verschlossen. Die derart vorbereitete Schmelzsicherungsschraube wird in eine Öffnung der umgebenden Wandung eines zu verschließenden Hohlraums, beispielsweise in das Gehäuse einer hydrodynamischen Strömungsmaschine, eingeschraubt und gegenüber der Wandung, beispielsweise durch einen Dichtring unterhalb des Schraubenkopfes, abgedichtet.

Um hohen Drücken im Inneren des Hohlraums widerstehen zu können und eine sichere Verschlussfunktion zu gewährleisten, ist es notwendig, das Schmelzlot über dem gesamten Querschnitt der Durchgangsbohrung in der Schmelzsicherungsschraube mit einer erheblichen Dicke auszuführen. Dies führt zu relativ großen Schmelzlotvolumen. Beim Einsatz einer solchen Schmelzsicherungsschraube in der Gehäusewandung einer hydrodynamischen Kupplung ist beispielsweise ein Schmelzlotvolumen von 700 Kubikmillimetern (mm³) erforderlich, wenn eine Durchgangsbohrung mit einem Durchmesser von 9 Millimetern in der Schmelzsicherungsschraube sicher verschlossen werden soll. US 3436 916 offenbart eine Hydrodynamische Strömungsmaschine gemäß dem Oberbegiff Die bekannten Hydrodynamischen Strömungsmaschinen mit Verschlüssen mit thermischer Sicherungsfunktion weisen Nachteile auf. Ein besonders gravierender Nachteil ist, dass die Ansprechzeit, das heißt die Zeit bis zur Auslösung der Sicherungsfunktion durch Freigeben des mit Schmelzlot verschlossenen Querschnitts, insbesondere beim Einsatz in hydrodynamischen Kupplungen bisher nicht exakt reproduzierbar ist. So lösten verschiedene Schmelzsicherungsschrauben ein und derselben Serie in derselben hydrodynamischen Kupplung zu unterschiedlichen Zeiten aus. Selbst in Fällen, in denen der Strömungsdurchgang in einer Schmelzsicherungsschraube nach dem Auslösen wieder nahezu identisch mit Schmelzlot verschlossen wurde, wies die so wieder instandgesetzte Schmelzsicherungsschraube eine abweichende Auslösezeit gegenüber der ursprünglichen Schmelzsicherungsschraube auf. Der Grund für die schlechte Reproduzierbarkeit des Auslöseverhaltens von Schmelzsicherungsschrauben des Standes der Technik war bisher unbekannt. Der Erfindung liegt die Aufgabe zugrunde, eine hydrodynamische Strömungsmaschine mit einem mit thermischer Sicherungsfunktion anzugeben, welcher gegenüber dem Stand der Technik verbessert ist. Insbesondere soll die erfindungsgemäße hydrodynamische Strömungsmaschine mit einen Verschluss mit thermischer Sicherungsfunktion ein exakt reproduzierbares Auslöseverhalten aufweisen und sich insbesondere durch kurze Ansprechzeiten auszeichnen. Dabei soll sich ein solcher Verschluss zur Verwendung der Abdichtung des Arbeitsraums einer hydrodynamischen Strömungsmaschine, insbesondere einer hydrodynamischen Kupplung, eignen.

Die erfindungsgemäße Aufgabe wird durch eine hydrodynamische Strömungsmaschine mit einem Verschluss gemäß Anspruch 1 gelöst. Die Unteransprüche beschreiben besonders vorteilhafte Weiterentwicklungen der Erfindung.

Der Verschluss weist ein Schmelzsicherungselement auf, welches in den Verschlusskörper eingefügt ist. Das Schmelzsicherungselement hält einen Durchlass, der in dem Verschlusskörper ausgebildet ist, unterhalb einer vorgegebenen Grenztemperatur verschlossen. Oberhalb einer vorgegebenen Grenztemperatur schmilzt das Schmelzsicherungselement und gibt somit den Durchlass in dem Verschlusskörper frei.

Gemäß einer ersten Ausführungsform umfasst der Verschlusskörper eine Hülse, die in den Durchlass des Verschlusskörpers an einem axialen Ende desselben derart eingesetzt ist, dass eine Durchgangsbohrung, welche in axialer Richtung in der Hülse ausgebildet ist, mit dem Bereich des Durchlasses des

Die beschriebene Erfindung weist eine gemeinsame grundlegende Erkenntnis auf, zu welcher der Erfinder gelangt ist. Der Erfinder hat nämlich erkannt, dass die schlechte Reproduzierbarkeit des Ansprechverhaltens herkömmlicher Verschlüsse mit thermischer Sicherungsfunktion, welche insbesondere wie die vorliegende Erfindung gemäß einer vorzuziehenden Ausführungsform als Schmelzsicherungsschraube ausgebildet sind, durch den zu großen Einfluss der Wärmekapazität des Verschlusskörpers auf das Schmelzsicherungselement begründet wurde. Demgemäss hat der Erfinder die herkömmlichen Schmelzsicherungsschrauben derart weiterentwickelt, dass der Einfluss der Wärmekapazität des Verschlusskörpers auf das Schmelzsicherungselement, insbesondere auf das eingelötete Schmelzlot in dem Durchlass des Verschlusskörpers, wesentlich vermindert wird.

Gemäß der Erfindung wird der Einfluss der Wärmekapazität des Verschlusskörpers auf das Schmelzsicherungselement dadurch gemindert, dass der Verschlusskörper im benachbarten Bereich zum Schmelzsicherungselement, insbesondere zu einem eingebrachten Schmelzlot, mit einer äußerst geringen Wärmekapazität ausgebildet ist. Dies wird erfindungsgemäß dadurch erreicht, dass die Wandstärke des Verschlusskörpers durch Vorsehen des axialen Fortsatzes vermindert ist, so dass das Schmelzsicherungselement von einer geringeren Masse des Verschlusskörpers, welche eine entsprechend geringere Wärmekapazität aufweist, umgeben wird.

Dises Ausführung zeichnet sich einerseits durch ein besonders schnelles Ansprechen bei erhöhten Temperaturen als auch durch ein äußerst genaues Ansprechen aus.

Damit die rfindungsgemäß hydrodynamische Strömungsmaschine mit einen Verschluss mit thermischer Sicherungsfunktion eine rasche Entleerung des Hohlraums, welcher durch ihn abgedichtet wird, ermöglicht, weist der strömungsleitende Durchlass vorteilhaft über seiner gesamten axialen Länge einen minimalen Durchmesser von wenigstens 11 Millimeter auf.

Der axiale Fortsatz weist vorteilhaft eine Wandstärke von maximal 2,5 Millimeter auf, insbesondere eine Wandstärke im Bereich von 1 bis 2 Millimeter oder sogar darunter.

Die Erfindung soll nachfolgend näher beschrieben werden.

Es zeigen:
- Figur 1: einen Verschluss in Form einer Schmelzsicherungsschraube gemäß des Standes der Technik;
- Figur 2: eine Ausführungsform eines Verschlusses mit thermischer Sicherungsfunktion in Form einer Schmelzsicherungsschraube;
- Figur 3: eine Ausführungsform des erfindungsgemäßen Verschlusses in Form einer Schmelzsicherungsschraube.

Die Figur 1 zeigt einen Verschluss gemäß des Standes der Technik. Wie man sieht, weist der Verschluss einen Verschlusskörper 1 mit einem Durchlass 1.1 auf, welcher durch ein Schmelzsicherungselement 2 verschlossen ist. Das Schmelzsicherungselement 2 ist ein Schmelzlot, welches über den gesamten Querschnitt des Durchlasses 1.1 in den Durchlass 1.1 eingebracht ist und eine erhebliche Dicke aufweist.

Ein solcher Verschluss gemäß des Standes der Technik, welcher beispielsweise in das Gehäuse einer hydrodynamischen Kupplung eingesetzt ist, weist eine Ansprechverzögerung auf, die zu einer Übertemperatur des Betriebsmediums von circa 50 K führt, in Abhängigkeit der Aufheizgeschwindigkeit des Betriebsmediums. Das bedeutet, die Temperatur des Betriebsmediums der hydrodynamischen Kupplung ist um ca. 50 K höher als die Nenntemperatur des Schmelzlotes. Ferner ist, wie bereits ausführlich in der Beschreibungseinleitung dargestellt wurde, die Reproduzierbarkeit des Ansprechverhaltens des gezeigten Verschlusses nicht zufriedenstellend.

In der Figur 2 isteine Ausführungsform eines Verschlusses gezeigt. Wie man sieht, weist diese Ausführungsform einen Grundkörper 1 mit einem Durchlass 1.1 auf, der im Bereich des axialen Endes, welches im Hohlraum 10 (hier nur ansatzweise dargestellt) zugewandt ist, mit drei Stufen versehen. Somit erweitert sich der Durchlass 1.1 von einem Durchmesser wie dargestellt von zunächst 11 Millimetern noch im Bereich seines ersten axialen Endes in drei Schritten in Richtung seines zweiten axialen Endes. Die erste stufenförmige Erweiterung dient der Aufnahme der Hülse 3 derart, dass der Durchlass 1.1 und die Durchgangsbohrung 3.1 in der Hülse miteinander fluchten. Die zweite stufenförmige Erweiterung dient zum Ausbilden eines Hohlraumes zwischen der Hülse 3 und dem Verschlusskörper 1. Schließlich dient die dritte Stufe der Aufnahme eines Absatzes in radialer Richtung der Hülse 3, um somit eine Anlage in axialer Richtung zwischen der Hülse 3 und dem Verschlusskörper 1 herzustellen, mittels welcher eine axiale Schubkraft, die stirnseitig auf das Schmelzsicherungselement, vorliegend ein eutektisches Schmelzlot, beziehungsweise die Hülse 3 auf der Seite des Hohlraumes 10 aufgebracht wird, in den Verschlusskörper 1 abzuleiten. Aus demselben Grunde ist auch der Durchmesser der Durchgangsbohrung 3.1 in der Hülse 3 im Bereich desselben axialen Endes mit einer stufenförmigen Erweiterung vorgesehen, so dass Schubkraft vom Schmelzlot auf die Hülse 3 übertragen werden kann. Das Schmelzlot kann daher mit einer vergleichsweise kurzen axialen Länge ausgeführt werden, vorliegend mit einer axialen Länge von 8 Millimetern, wobei eine Toleranz von +/- 1 Millimeter vorteilhaft ist.

Im Bereich des zweiten axialen Endes, das heißt des Endes, welches dem Hohlraum 10 zugewandt ist, weist die Durchgangsbohrung 3.1 in der Hülse 3 einen Durchmesser von 12 Millimetern auf, am entgegengesetzten Ende der Hülse, sowie über nahezu den restlichen axialen Bereich des Durchlasses 1.1 ist ein Durchmesser von 11 Millimetern vorgesehen. An seinem ersten axialen Ende kann, wie gezeigt, der Durchlass 1.1 mit einer deutlichen Querschnittserweiterung versehen sein, um das Ausströmen von Medium aus dem Hohlraum 10 im Auslösefall zu erleichtern.

Die Hülse ist vorteilhaft aus einem thermisch gut leitenden Werkstoff ausgebildet, beispielsweise aus Kupfer. Der Verschlusskörper 1 kann beispielsweise aus CuZn39Pb3F43 ausgebildet sein.

In der Figur 3 ist eine Ausführungsform eines erfindungsgemäßen Verschlusses dargestellt. Diese Ausführungsform weist den erfindungsgemäßen zylindrischen axialen Fortsatz 1.4 an dem zweiten axialen Ende 1.3 des Verschlusskörpers 1 auf. Wie man sieht, weist dieser zylindrische Fortsatz zunächst eine Wandstärke von 1,5 Millimetern und im äußersten Bereich des zweiten axialen Endes 1.3 eine Wandstärke von 1 Millimeter auf. Der gesamte axiale Fortsatz 1.4 kann von Medium, welches in dem Hohlraum 10 aufgenommen ist, umspült werden, so dass die Temperatur des Mediums in dem Hohlraum 10 sehr direkt auf das Schmelzsicherungselement 2, vorliegend ein eutektisches Schmelzlot, übertragen wird. Aufgrund der geringen Wandstärke des axialen Fortsatzes ist der Einfluss der Wärmekapazität dieses Verschlusskörperbereiches 1 sehr gering. Eine schnelle und sehr genau reproduzierbare Auslösefunktion des Verschlusses wird erreicht.

Ähnlich wie in der Figur 2 ist auch hier der Durchlass 1.1 im Bereich des zweiten axialen Endes 1.3 mit einer stufenförmigen Querschnittserweiterung versehen. Dadurch wird zum einen eine noch geringere Wandstärke des axialen Fortsatzes im äußersten axialen Bereich erreicht, und andererseits die oben beschriebene axiale Schubkraftübertragung vom Schmelzsicherungselement auf den Verschlusskörper 1 ermöglicht. Diese stufenförmige Querschnittserweiterung im Durchlass 1.1 erstreckt sich insbesondere vom äußeren axialen Ende 1.3 bis maximal zur Hälfte des eingebrachten Schmelzsicherungselementes, d.h. vorliegend bis maximal 4 Millimeter axial in den Durchlass 1.1 hinein. Eine andere Ausführung weist (wie dargestellt) eine axiale Ausdehnung dieser Querschnittserweiterung von 2 mm auf, d.h. zum Beispiel ein Viertel der axialen Ausdehnung des Schmelzsicherungselementes.

Im gezeigten Ausführungsbeispiel der Figur 3 kann der Verschlusskörper 1 beispielsweise aus demselben Werkstoff wie der Verschlusskörper in der Figur 2 ausgeführt sein. Alternativ kann für eine oder beide Ausführungen auch als Werkstoff für den Verschlusskörper St52-3 verwendet werden.

Beide in den Figuren 2 und 3 gezeigte Verschlusskörper weisen eine vergleichsweise große axiale Länge auf, nämlich eine Länge von 25 Millimetern. Dadurch wird erreicht, dass sich das Schmelzlot vergleichsweise weit innen im Hohlraum 10 befindet, wodurch einerseits die Einflüsse der Umgebung vermindert werden und andererseits der Einfluss der Temperatur im Hohlraum 10 auf das Schmelzsicherungselement 2 direkter wird.

## Patentansprüche

1. Hydrodynamische Strömungsmaschine, insbesondere hydrodynamische Kupplung, mit einem Arbeitsraum, welcher mittels eines Verschlusses mit thermischer Sicherungsfunktion gegenüber der Umgebung abgedichtet ist, wobei der Verschluss die folgenden Merkmale umfasst:
einen Verschlusskörper (1) zum Abdichten des Arbeitsraumes;
ein Schmelzsicherungselement (2), welches in den Verschlusskörper (1) eingefügt ist und einen Durchlass (1.1), der in dem Verschlusskörper (1) ausgebildet ist, zumindest mittelbar verschlossen hält;
der Verschlusskörper (1) weist ein erstes axiales Ende (1.2) und ein zweites, entgegengesetztes axiales Ende (1.3) auf, wobei sich der Durchlass (1.1) in axialer Richtung von dem ersten axialen Ende (1.2) zu dem zweiten axialen Ende (1.3) erstreckt und im Bereich des zweiten axialen Endes (1.3) durch das Schmelzsicherungselement (2) verschlossen ist;
im Bereich seines zweiten axialen Endes (1.3) ist der Verschlusskörper (1) mit einem zylinderförmigen oder im wesentlichen zylinderförmigen axialen Fortsatz (1.4) versehen, welcher eine gegenüber dem übrlgen Verschlusskörper (1) verringerte Wandstärke aufweist und welcher einen axialen Abschnitt der umgebenden Außenwandung des Durchlasses (1.1) ausbildet; wobei
das Schmelzsicherungselement (2) über wenigstens der Hälfte seiner axialen Länge von dem axialen Fortsatz (1.4) in Umfangsrichtung umschlossen wird;
das Schmelzsicherungselement (2) ist ein Schmelzlot, welches in den Durchlass (1.1) in dem Verschlusskörper (1) eingelötet ist;
der Durchlass (1.1) ist an seinem axialen Ende, in dem das Schmelzlot angeordnet ist, mit einer stufenförmigen Erweiterung des Querschnitts ausgebildet, so dass ein Teil des Schmelzlots in axialer Richtung gegen den Verschlusskörper (1) derart zum Anliegen kommt, dass eine axiale Schubkraft von dem Schmelzlot auf den Verschlusskörper (1) übertragbar ist; wobei die stufenförmige Erweiterung in jenem axialen Ende (1.3) ausgeführt ist, welches beim Einsetzen des Verschlusses in eine den Arbeitsraum begrenzende Wand dem Inneren des Arbeitsraumes zugewandt ist;
**gekennzeichnet durch** die folgenden Merkmale:
der Verschlusskörper ist derart in die Wand der hydrodynamischen Maschine eingesetzt, dass der gesamte axiale Fortsatz (1,4) von dem Arbeitsmedium der hydrodynamischen Maschine umspült werden kann;
das Schmelzlot reicht axial über die stufenförmige Erweiterung hinweg.

2. Hydrodynamische Strömungsmaschine gemäß Anspruch 1, **dadurch gekennzeichnet, dass** das Schmelzlot eine axiale Länge von maximal 9 Millimeter aufweist, insbesondere eine Länge von 8 Millimeter.

3. Hydrodynamische Strömungsmaschine gemäß Anspruch 2, **dadurch gekennzeichnet, dass** das Schmelzlot eine Länge von mindestens 5 Millimeter aufweist.

4. Hydrodynamische Strömungsmaschine gemäß einem der Ansprüche 1 bis 3, **dadurch gekennzeichnet, dass** der Durchlass (1.1) über seiner gesamten axialen Länge einen minimalen Durchmesser von wenigstens 11 Millimetern aufweist.

5. Hydrodynamische Strömungsmaschine gemäß einem der Ansprüche 1 bis 4, **dadurch gekennzeichnet, dass** der axiale Fortsatz (1.4) eine Wandstärke von maximal 2,5 Millimeter aufweist, insbesondere eine Wandstärke im Bereich von 1 Millimeter bis 2 Millimeter oder weniger.

## Claims

1. A hydrodynamic flow machine, in particular a hydrodynamic clutch, having a work chamber, which is sealed in relation to the environment using a closure having a thermal safeguard function, the closure comprising the following features:
a closure body (1) for sealing the work chamber;
a fusible safeguard element (2), which is incorporated in the closure body (1) and keeps a passage (1.1), which is implemented in the closure body (1), at least indirectly closed;
the closure body (1) has a first axial end (1.2) and a second, opposing axial end (1.3), the passage (1.1) extending in the axial direction from the first axial end (1.2) to the second axial end (1.3) and being closed by the fusible safeguard element (2) in the area of the second axial end (1.3),
the closure body (1) is provided with a cylindrical or essentially cylindrical axial extension (1.4) in the area of its second axial end (1.3), which has a decreased wall thickness in relation to the remaining closure body (1) and
which forms an axial section of the surrounding external wall of the passage (1.1);
the fusible safeguard element (2) being enclosed by the axial extension (1.4) around the circumference over at least half of its axial length;
the fusible safeguard element (2) is a fusible solder which is soldered into the passage (1.1) in the closure body (1);
the passage (1.1) is implemented having a stepped expansion of the cross-section on its axial end in which the fusible solder is situated, so that a part of the fusible solder comes to rest against the closure body (1) in the axial direction in such a manner that an axial thrust force is transmittable from the fusible solder to the closure body (1); the stepped expansion being implemented in the axial end (1.3) which faces toward the interior of the work chamber when the closure is inserted into a wall delimiting the work chamber;
**characterized by** the following features:
the closure body is inserted into the wall of the hydrodynamic machine in such a manner that the entire axial extension (1.4) may have the work medium of the hydrodynamic machine wash around it;
the fusible solder extends axially beyond the stepped expansion.

2. The hydrodynamic flow machine according to Claim 1, **characterized in that** the fusible solder has an axial length of at most 9 mm, in particular a length of 8 mm.

3. The hydrodynamic flow machine according to Claim 2, **characterized in that** the fusible solder has a length of at least 5 mm.

4. The hydrodynamic flow machine according to one of Claims 1 through 3, **characterized in that** the passage (1.1) has a minimum diameter of at least 11 mm over its entire axial length.

5. The hydrodynamic flow machine according to one of Claims 1 through 4, **characterized in that** the axial extension (1.4) has a wall thickness of at most 2.5 mm, in particular a wall thickness in the range from 1 mm to 2 mm or less.

## Revendications

1. Turbomachine hydrodynamique, en particulier accouplement hydrodynamique, avec un espace de travail isolé hermétiquement de l'environnement au moyen d'une fermeture à fonction de sécurité thermique, la fermeture présentant les caractéristiques suivantes :
un élément de fermeture (1) pour fermer hermétiquement l'espace de travail ;
un élément de sécurité fusible (2), qui est intégré dans l'élément de fermeture (1) et garde au moins indirectement fermé un passage (1.1) formé dans l'élément de fermeture (1) ;
l'élément de fermeture (1) présente une première extrémité axiale (1.2) et
une deuxième extrémité axiale (1.3) opposée, le passage (1.1) s'étendant dans le sens axial de la première extrémité axiale (1.2) à la deuxième extrémité axiale (1.3) et étant fermé au niveau de la deuxième extrémité axiale (1.3) par l'élément de sécurité fusible (2) ;
au niveau de sa deuxième extrémité axiale (1.3), l'élément de fermeture (1) est muni d'une saillie axiale (1.4) cylindrique ou sensiblement cylindrique, qui présente une épaisseur de paroi réduite par rapport au reste de l'élément de fermeture (1) et qui forme une partie axiale de la paroi extérieure environnante du passage (1.1) ; dans lequel
l'élément de sécurité fusible (2) est entouré dans le sens de sa circonférence par la saillie axiale (1.4) sur au moins la moitié de sa longueur ;
l'élément de sécurité fusible (2) est une brasure fusible qui est brasée dans le passage (1.1) de l'élément de fermeture (1) ;
le passage (1.1) est doté à son extrémité axiale, dans laquelle la brasure fusible est disposée, d'un élargissement de sa section en forme de gradin, de sorte qu'une partie de la brasure fusible vient reposer dans le sens axial contre l'élément de fermeture (1) de telle manière qu'une force de poussée axiale puisse être transmise de la brasure fusible à l'élément de fermeture (1), l'élargissement en forme de gradin étant réalisé à l'extrémité axiale (1.3) qui est tournée vers l'intérieur de l'espace de travail lorsque la fermeture est introduite dans une paroi délimitant l'espace de travail ;
**caractérisée en ce que**
l'élément de fermeture est inséré dans la paroi de la machine hydrodynamique de telle manière que l'ensemble de la saillie axiale (1.4) puisse être baigné par le fluide de travail de la machine hydrodynamique ; la brasure fusible s'étend dans le sens axial au-delà de l'élargissement en forme de gradin.

2. Turbomachine hydrodynamique selon la revendication 1, **caractérisée en ce que** la brasure fusible a une longueur axiale de 9 millimètres au maximum, en particulier une longueur de 8 millimètres.

3. Turbomachine hydrodynamique selon la revendication 2, **caractérisée en ce que** la brasure fusible a une longueur de 5 millimètres au minimum.

4. Turbomachine hydrodynamique selon l'une des revendications 1 à 3, **caractérisée en ce que** le passage (1.1) présente sur toute sa longueur axiale un diamètre minimal d'au moins 11 millimètres.

5. Turbomachine hydrodynamique selon l'une des revendications 1 à 4, **caractérisée en ce que** la saillie axiale (1.4) a une épaisseur de parois d'au moins 2,5 millimètres, en particulier une épaisseur de parois comprise entre 1 millimètre et 2 millimètres ou moins.
